Europäisches Patentamt

European Patent Office

Office européen des brevets

(19)

(11) Veröffentlichungsnummer: **0 001 237**
**B1**

(12) **EUROPÄISCHE PATENTSCHRIFT**

(45) Veröffentlichungstag der Patentschrift: **17.06.81**

(21) Anmeldenummer: **78100818.0**

(22) Anmeldetag: **04.09.78**

(51) Int. Cl.³: **B 29 J 5/02, C 08 L 97/02, C 08 L 61/20**

(54) **Verfahren zur Herstellung von Spanholzwerkstoffen unter Verwendung formaldehyd-bindender Mittel.**

(30) Priorität: **07.09.77 DE 2740207**

(43) Veröffentlichungstag der Anmeldung:
**04.04.79 Patentblatt 79/7**

(45) Bekanntmachung des Hinweises auf die Patenterteilung:
**17.06.81 Patentblatt 81/24**

(84) Benannte Vertragsstaaten:
**BE DE FR SE**

(56) Entgegenhaltungen:
**DE - A - 1 669 142**
**DE - B - 1 223 535**
**GB - A - 407 161**
**US - A - 3 649 397**

(73) Patentinhaber: **BASF Aktiengesellschaft**
**Carl-Bosch-Strasse 38**
**D-6700 Ludwigshafen (DE)**

(72) Erfinder: **Graser, Martin**
**Buergermeister-Benz-Strasse 10**
**D-6711 Beindersheim (DE)**
Erfinder: **Hann, Ernst Wilhelm**
**Prinzregentenstrasse 37**
**D-6700 Ludwigshafen (DE)**
Erfinder: **Henkel, Helmut**
**Rene-Bohn-Strasse 4**
**D-6700 Ludwigshafen (DE)**
Erfinder: **Mayer, Johann, Dr.**
**Am Mandelgarten 5**
**D-6713 Freinsheim (DE)**
Erfinder: **Schmidt-Hellerau, Christof**
**Rheinrugenstrasse 45**
**D-6700 Ludwigshafen (DE)**

Courier Press, Leamington Spa, England.

# 0 001 237

Verfahren zur Herstellung von Spanholzwerkstoffen unter Verwendung formaldehyd-bindender Mittel

Die Erfindung betrifft ein Verfahren zur Verringerung der Formaldehydentwicklung von Spanholzwerkstoffen, die mit Formaldehydkondensation gebunden sind.

Es ist bekannt, daß Formaldehydkondensate von Harnstoff oder Melamin besonders bei Einwirkung von Feuchtigkeit Formaldehyd abspalten. Wenn man sie als Bindemittel zur Herstellung von Holzwerkstoffen verwendet, so erhält man Werkstoffe, die u.U. jahrelang Formaldehydgas an die Umgebung abgeben.

Als Mittel zur Beeinflussung dieser lästigen Eigenschaft wird den Bindemitteln fester Harnstoff zugesetzt; man nimmt an, daß es besonders in Gegenwart natürlichen Holz-bzw. Luftfeuchte zu einer Reaktion des Harnstoffs mit dem freien Formaldehyd kommt, d.h. der Harnstoff als Fangsubstanz für den Formaldehyd wirkt.

Ein jüngerer Vorschlag sieht vor, den Harnstoff in Form eines Adsorbats an Cellulose zuzusetzen, z.B. in Form von kleinen Fasern oder Fetzen harnstoffgetränkten Papiers. Man hat nämlich beobachtet, daß die formaldehydbindenden Eigenschaften des Harnstoffs besser genutzt werden, wenn dieser räumlich getrennt vom Bindemittel eingebracht wird.

Der vorgennante Vorschlag leidet, ebenso wie die Überlegung, den Werkstoffen einfach freien Harnstoff vor der Verarbeitung zuzusetzen, an der Schwierigkeit der gleichmäßigen Verteilung, weil das Verhalten dieser Stoffe auf den sogenannten Schüttstationen, d.h. dort, wo die Späne zu einer Matte bzw. einem Kuchen geformt werden, vom Sedimentationsverhalten der Späne zu stark abweicht. Außerdem treten jedenfalls im Falle der Verwendung von harnstoffhaltigem Papier erhebliche Kosten hinzu.

Ein anderer Weg, die Formaldehydentwicklung aus den Werkstoffen zu verhindern, besteht in der Verwendung von Überzugsmitteln (d.h. Lacken), die formaldehydbindende Mittel enthalten. Abgesehen davon, daß sich solche Lacke nicht immer anwenden lassen, beseitigen sie das Problem nicht an seinem Entstehungsort, sondern erst sekundär. Diese, z.B. aus den DT—PS 11 88 750 bzw. DT—OS 16 69 142 bekannte Lösung hat mit der hier gestellten Aufgabe nichts zu tun.

Die Erfindung hat sich die Aufgabe gestellt, Harnstoff auf an sich technisch vorhandenen bzw. bekannten Wegen den Holzwerkstoffen selbst zuzusetzen, die nicht erst geschaffen werden müssen und keine wesentlichen Kosten verursachen.

Es wurde gefunden, daß mit erheblichem Vorteil Harnstoff zusammen mit den Mitteln zusetzt, die üblicherweise neben dem Bindemittel (Leim, Klebstoff) verwendet werden, um besonders das Quellverhalten der Werkstoffe, also deren Wasserdampfempfindlichkeit zu beeinflussen.

Bindemittel auf der Grundlage von Formaldehydkondensaten des Harnstoffs oder Melamins im Sinne der Erfindung sind die üblichen, zur Herstellung von Holzwerkstoffen verwendeten Bindemittel. Sie sind als wäßrige Lösungen oder Pulver im Handel und enthalten Harnstoff- und/oder Melamin-Formaldehyd-Kondensate mit einem Molverhältnis des Formaldehyds zu Harnstoff bzw. Melamin wie 1.2:1 bis 1.7:1 bzw. 1.4:1 bis 2:1. Auch Mischkondensate und Kondensate, die weitere Bestandteile, z.B. Phenol oder andere Aldehyde enthalten können, sind üblich. Ihre Herstellung und Verwendung ist allgemein bekannt und für die Erfindung ohne Belang.

Erfindungsgemäß behandelt man die zur Herstellung der Spanholzwerkstoffe vorgesehenen Späne bzw. andere zerkleinerte Holzbestandteile (Flachsschäben, Stroh, o.ä.) getrennt, d.h. unabhängig vom Bindemittelauftrag mit einer wäßrigen Dispersion, die in der wäßrigen Phase Harnstoff und als disperse Phase ein Mineralwachs und/oder ein in Wasser unlösliches, dispergierbares Polymerisat enthält.

Es ist an sich bekannt und technisch vielfach üblich, daß die Beleimungsmaschinen neben den Zuleitungsrohren für die Klebstoffansätze ("Flotten") noch eine gesonderte Zuleitung für Paraffin-Dispersionen aufweisen. Wäßrige Paraffindispersionen wirken im Sinne der vorstehenden Angaben quellvermindernd.

Die getrennt Zuleitung der Paraffin-Dispersion hat in der industriellen Praxis Vorteile gebracht: Verbesserung der Querzugfestigkeit, Senkung de Quellwerte und Vermeidung des Schäumens der Klebstoffansätze. Üblicherweise werden Paraffin-Dispersionen in der Weise getrennt zugeführt, daß sie im Einlauftrichter oder an der Stirnseite der Beleimungsmaschine räumlich vor der Zugabe des Klebstoffes eingesprüht werden. Die Paraffin-Dispersion sollte also vorzugsweise schon auf den Spänen verteilt sein, bevor die Klebstoff-Tröpfchen die Späne erreichen. Bei dem nachfolgend beschriebenen Verfahren wird die Verwendung einer derart eingerichteten Beleimungsmaschine empfohlen.

Die Erklärung für die Wirkung der Erfindung ist die, daß der Harnstoff nicht frei vorliegt, sondern durch eine "Ummantelung" an einer sofortigen Reaktion mit dem Klebstoff gehindert wird. Hierzu haben sich besonders Mineralwachs-(Paraffin-) und/oder Polymerisat-Dispersionen als geeignet erwiesen.

Als Mineralwachs-Dispersionen werden wäßrige Zubereitungen von Paraffinen, d.h. $C_{10}$—$C_{30}$-Paraffinkohlenwasserstoffen oder abgebauten Polyäthylenen (sog. A—Wachse) verstanden. Sie sind vielfach handelsüblich und haben gewöhnlich einen Feststoffenteil von 30 bis 70%.

Wäßrige Polymerisat-Dispersionen mit einem Trockengehalt von z.B. 40 bis 60% werden nach den üblichen Methoden hergestellt. Sie enthalten als Polymerisat gewöhnlich Vinyl- oder Acrylpolymere, z.B. Polymere des Styrols, Methylmethacrylats, Vinylacetats, Vinylchlorid, Butadiens und anderer Monomerer, in aller Regel in Form eines Copolymerisats verschiedener Monomerer. Auch solche Polymerisate bzw. Polymerisat-Dispersionen sind weitgehend handelsüblich.

Erfindungsgemäße Dispersionen enthalten im Falle der Verwendung eines Mineralwachses 5 bis 50, bevorzugt 10 bis 30% Mineralwachs, z.B. Paraffinwachs mit einem Erweichungs- bzw. Schmelzpunkt zwischen 45 und 60°C, gegebenenfalls bis zu 20, insbesondere 2 bis 15% eines dispergierten Polymerisats, insbesondere aus der Gruppe der Acryl-Polymeren, sowie im übrigen 20 bis 40%ige wäßrige Harnstofflösung bzw. 5 bis 50%, insbesondere 40% Harnstoff und insgesamt wenigstens 30% Wasser. Zur Verbesserung der Stabilität und im Sinne einer Verbesserung der erfindungsgemäßen Wirkung werden z.B. 1 bis 5% Stärke, 2 bis 15% Melamin oder 1 bis 10% Stearinsäure oder ähnliche wachsartige Emulgatoren zugesetzt (alle Angaben Gewichtsprozente). Die Dispersionen werden zweckmäßig in einer Menge von 1 bis 10%, bezogen auf atro Holz, verwendet, d.h. man setzt auf diese Weise 0,3 bis 4%, bezogen auf absolut trockenes Holz, an formaldehydbindenden Mitteln zu.

Wie aus den nachfolgenden Beispielen hervorgeht, sind die sonstigen Bedingungen und Voraussetzungen für die Herstellung von Spanholzwerkstoffen nicht von den üblichen verschieden, besonders was Preßzeit, -temperatur und -druck angeht.

Bemerkenswerterweise verbessert sich nicht nur das Ergebnis hinsichtlich der Neigung zur Formaldehydentwicklung, sondern auch das Quellverhalten der Werkstoffe wird günstig beeinflußt.

Die Bestimmungsmethode für Formaldehyd (FESYP—Methode) entspricht der in Europa üblichen Perforatormethode. Hierbei werden 100 g Spanplattenprüfkörper in der Größe 25 x 25 mm x Dicke mit siedendem wasserfreien Toluol 2 Stunden lang behandelt und das Destillat mit Wasser ausgezogen. Dabei wird der vorhandene Formaldehyd in dem vorgelegten Wasser gesammelt und anschließend iodometrisch titriert.

Beispiel 1

Man stellt sich zunächst die folgenden mit DO bis D7 bezeichneten Zubereitungen her (die Bezeichnungen sind in der nachfolgenden Tabelle 1 wiederverwendet):

DO: Eine wäßrige Paraffinemulsion durch Mischen bei 85°C von

27,3% Paraffin (Schmelzpunkt 52°C)

2,7% Stearinsäure

68,0% Wasser

2,0% wäßr. Ammoniak (25%)

D1: Eine wäßrige Paraffinemulsion, ebenfalls bei 85°C, aus

23,6% Paraffin

2,3% Stearinsäure

72,5% Harnstofflösung
41,3%ig, 85°C

1,6% wäßr. Ammoniak (25%)

D2 bis D6:
Wäßrige Dispersionen von Acrylestercopolymerisaten, Paraffin und Harnstofflösung, indem zunächst Dispersionen entsprechender Copolymerisate wie üblich hergestellt werden, und die Dispersion mit Paraffin und gegebenenfalls Wasser auf eine einheitliche Zusammensetzung von 31% Copolymerisat, 31% Harnstoff, Rest Wasser und Paraffin bringt.

Die dispergierten Copolymerisate haben die folgende Zusammensetzung:

D2:

89% Butylacrylat

5% Methylmethacrylat

3% N-Methylolmethacrylamid

3

# 0 001 237

3% Hydroxypropylacrylat

D3

82% Butylacrylat

15% Acrylnitril

3% Hydroxypropylacrylat

D4

49% Methylmethacrylat

45% Butylacrylat

3% N-Methylolmethacrylamid

3% Hydroxypropylacrylat

D5

90% Äthylacrylat

5% Butylacrylat

5% N-Methylolmethacrylamid

D6

50% Styrol

44% Butylacrylat

3% Acrylamid

3% Hydroxypropylacrylat

D7: Aus

15,2 % Paraffin

1,52% Stearinsäure

3,94% Stärke

3,94% Dispersion D6

75,40% Harnstofflösung 42%

stellt man durch Mischen bei 85°C eine Dispersion her, die bei einem Wachsanteil von 16,7% einen Harnstoffgehalt von 31,7% aufweist.

Die nach den vorstehenden Angaben bereitgestellten Dispersionen werden unabhängig von der Beleimung auf eine Spanmischung aus 50/50 Buchen/Fichtenholzaufgesprüht, wobei im Falle der Dispersionen D2 bis D6 jeweils 4.47% — bezogen auf absolut trockene Holzmasse — der dispergierten Copolymerisate und 4.0% Paraffinemulsion D1 als Mischung aufgebracht wurden. Die Späne hatten folgende Siebzusammensetzung: 16% A, 35% B und 49% C (übliche Größenklassenangabe).
Die Leimflotte wurde in einer Menge von 12% (Harz bez. auf atro Späne, aufgebracht und hatte folgende Zusammensetzung:

Harnstoff-Melamin-Leim, phenolmodifiziert, handelsüblich als [R]Kauramin-Leim 540 fl.      100,00 kg

Ammonchlorid-Lsg. 25%ig      4,00 kg

4

| Ammoniak 25%ig | 1,80 kg |
| Harnstoff | 3,00 kg. |
| Wasser | 5,70 kg |

Herstellung von Spanplatten:

Die Preßtemperatur betrug 165°C bei 2,5 N/mm² Preßdruck.

Die Preßzeit betrug 6 Minuten bei 23 mm Rohdicke.

Die Platten wurden heiß in einem Kasten eingelagert, der mit Schaumpolystyrol ausgekleidet war und dort 3 Tage belassen.

TABELLE 1

| Verwendete Dispersion | | | D0 (Vergleich) | D1 | D2 | D3 | D4 | D5 | D6 | D7 |
|---|---|---|---|---|---|---|---|---|---|---|
| Dispersion D2—D6 (%) | | | 4,0 | 4,62 | 4,47 | 4,47 | 4,47 | 4,47 | 4,47 | 4,38 |
| Dispersion D1 (%) | | | — | — | 4,00 | 4,00 | 4,00 | 4,00 | 4,00 | 1,56 |
| = % Paraffin atro | | | 1,20 | 1,20 | 1,20 | 1,20 | 1,20 | 1,20 | 1,20 | 1,20 |
| = % Harnstoff atro | | | 0,0 | 1,39 | 1,39 | 1,39 | 1,39 | 1,39 | 1,39 | 1,39 |
| + % Wasser vorgedüst | | | 1,70 | 2,50 | — | — | — | — | — | 1,50 |
| Feuchte beim Verpressen % | | | 14,5 | 16,1 | 15,8 | 16,6 | 16,2 | 15,4 | 16,8 | 15,5 |
| Dichte | kg/m³ | $\bar{x}$ | 648 | 641 | 614 | 625 | 632 | 620 | 620 | 623 |
| Biegefestigkeit | N/mm² | $\bar{x}$ | 21,1 | 21,8 | 18,2 | 19,4 | 21,0 | 18,6 | 20,0 | 20,7 |
| Querzugfestigkeit V20 | N/mm² | $\bar{x}$ | 0,88 | 0,95 | 0,80 | 0,86 | 0,97 | 1,03 | 0,96 | 0,98 |
| Querzugfestigkeit V100 | N/mm² | $\bar{x}$ | 0,18 | 0,23 | 0,22 | 0,18 | 0,25 | 0,27 | 0,22 | 0,25 |
| Quellung nach 2 Std. | % | $\bar{x}$ | 1,7 | 1,6 | 1,4 | 1,6 | 1,5 | 1,5 | 1,5 | 1,7 |
| Quellung nach 24 Std. | % | $\bar{x}$ | 5,5 | 5,2 | 4,9 | 5,2 | 5,1 | 4,7 | 5,0 | 5,3 |

$\bar{x}$ = Mittelwert ans 3 Platten = 30 Prüfkörpern

| Formaldehydabspaltung/FESYP: | | | | | | | | | | |
|---|---|---|---|---|---|---|---|---|---|---|
| Trockengehalt | % | | 92,4 | 92,2 | 92,5 | 92,0 | 92,8 | 92,7 | 92,7 | 92,3 |
| Perforatorwert HCHO (2 Messungen) | % | | 0,04 0,05 | 0,01 0,02 | 0,02 0,02 | 0,02 0,03 | 0,01 0,01 | 0,01 0,01 | 0,01 0,01 | 0,01 0,01 |

### Beispiel 2

Es wurden Einschichtplatten einer Rohdicke von 23 mm hergestellt aus 50% Eichen- und 50% Fichtenspänen.

Preßbedingungen: 8 min bei 160°C/2,5 N/mm² mit sofortiger Rückkühlung.

Leimansatz

| | | | |
|---|---|---|---|
| Kunststoffharz-Leim erhältlich als Kaurit-Leim 375 fl. | 100,00 | | Paraffin-Emulsion (1% Festwachs, bezogen auf trockene Holzmasse, getrennt verdüst) |
| Ammonchlorid-Lsg. 20%ig | 4,0 | | |
| Ammoniak | 3,5 | | |
| Wasser | 13,5 | | |

Während der links in der folgenden Tabelle 2 stehende Versuch ohne weitere Zusätze stattfand, wurden den Versuchsmustern der rechten Spalte 3,25% der in Beispiel 1 unter D2 beschriebenen Emulsion zugesetzt (entsprechend 1% Harnstoff).

### TABELLE 2

| | | | | |
|---|---|---|---|---|
| Feuchte beim Verpressen | % | | 14,6 | 13,4 |
| Dicke/geschliffen | mm | $\bar{x}$ | 21,6 | 21,6 |
| Dichte | kg/m³ | $\bar{x}$ | 694 | 686 |
| Biegefestigkeit | N/mm² | $\bar{x}$ | 25,7 | 21,8 |
| Querzugfestigkeit V20 | N/mm² | $\bar{x}$ | 0,58 | 0,58 |
| Quellung nach 2 Stdn. | % | $\bar{x}$ | 2,6 | 2,5 |
| Quellung nach 24 Stdn | % | $\bar{x}$ | 9,2 | 9,9 |

x = Mittelwert aus 5 Platten = 50 Prüfkörpern

| | | | |
|---|---|---|---|
| Formaldehydabspaltung/FESYP: | | | |
| Trockengehalt | % | 91,6 | 92,1 |
| Perforatorwert HCHO | % | 0,04 | 0,02 |

### Beispiel 3

Auf einer Papiermaschine wird in der Leimpresse eine formaldehydbindende Substanz (Harnstoff und Maisstärke) in die für diesen Zweck speziell hergestellte Papierbahn eingebracht. Nach Fixierung und Trocknung wird die imprägnierte Bahn zerfasert und den beleimten Holzpänen zugemischt.

Die nachfolgenden Tabelle zeigt den Einfluß hinsichtlich der Verminderung der Formaldehydabspaltung durch Zusatz von Harnstoff-Paraffin-Emulsion, Harnstoff-Acrylat-Dispersion (D7 aus Beispiel, 1) und zerfasertem, mit Harnstoff getränktem Papier.

Kaurit-Leim 375 fl, Einschichtplatten 35 mm, Preßtemperatur 190°C, Preßzeit 9 Minuten, 9% Festharz auf atro Holz.

| | | Harnstoff Acrylat-Dispersion | Harnstoff Paraffin-Emulsion | Papier-faser Harnstoff Maisstärke |
|---|---|---|---|---|
| Zugabe Dispersion (%) | 0 | 3,85 | 3,75 | 1,96 |
| Harnstoff (%) | 0 | 0,77 | 0,77 | 0,77 |
| Feuchte beim Pressen % | | 10,2 | 10,2 | 9,8 | 10 |
| Dichte kg/m³ | $\bar{x}$ 540 | 540 | 537 | 533 |
| Biegefestigkeit N/mm² | $\bar{x}$ 18,2 | 17,1 | 18,6 | 18,1 |
| Querzugfestigkeit N/mm² | $\bar{x}$ 0,44 | 0,35 | 0,53 | 0,42 |
| Quellung n. 2 h (%) | $\bar{x}$ 1,6 | 1,7 | 1,5 | 1,6 |
| Quellung n. 24 h (%) | $\bar{x}$ 6,4 | 7,6 | 6,2 | 7,0 |
| Trockengehalt % | $\bar{x}$ 92,5 | 93,5 | 93,2 | 92,8 |
| Perforator % HCHO | $\bar{x}$ 0,07 | 0,02 | 0,02 | 0,02 |

$\bar{x}$ = Mittelwert

**Patentanspruch**

Verfahren zur Herstellung von Spanholzwerkstoffen durch Behandeln von Holzspänen bzw. zerkleinerten Holzbestandteilen in einer Beleimungsmaschine mit einem wärmehärtbaren Bindemittel auf der Grundlage eines Kondensationsproduktes aus Formaldehyd, Harnstoff und/oder Melamin mit einem Molverhältnis des Formaldehyds zu Harnstoff bzw. Melamin wie 1,2:1 bis 1,7:1 bzw. 1,4:1 bis 2:1 und Verpressen der Späne unter Wärmeeinwirkung, wobei die Späne in der Beleimungsmaschine, jedoch unabhängig von der Zugabe des Bindemittels, außerdem mit Mitteln behandelt werden, die der Verbesserung des Quellverhaltens der Werkstoffe oder anderer Eigenschaften dienen, dadurch gekennzeichnet, daß man die Späne unabhängig von der Bindemittelbehandlung in der Beleimungsmaschine mit einer wäßrigen Dispersion behandelt, die in der wäßrigen Phase gelösten Harnstoff und als disperse Phase ein Mineralwachs und/oder ein in Wasser dispergierbares Polymerisat enthält, mit der Maßgabe, daß im Falle der Verwendung eines Mineralwachses die Dispersion auf 100 Gewichtsteile je 5 bis 50 Gewichtsteile Harnstoff und Mineralwachs und mindestens 30 Gewichtsteile Wasser enthält.

**Claim**

A process for the production of particle board products by treating chips of wood or wood particles in a gluing machine with a thermosetting binder based on a condensation product of formaldehyde, urea and/or melamine, the molar ratio of formaldehyde to urea being from 1.2 to 1.7:1 and the molar ratio of formaldehyde to melamine being from 1.4 to 2:1, and pressing the chips under the action of heat, the chips also being treated in the gluing machine, but independently of the addition of the binder, with agents which improve the swelling behaviour of the products or other properties, characterized in that the chips are treated, independently of the binder treatment in the gluing machine, with an aqueous dispersion which contains urea dissolved in the aqueous phase and, as disperse phase, a mineral wax and/or a water-dispersible polymer, with the proviso that, when a mineral wax is used, the dispersion contains per 100 parts by weight 5 to 50 parts by weight each of urea and mineral wax and at least 30 parts by weight of water.

**Revendication**

Procédé pour la fabrication de matériaux de bois en copeaux par traitement de copeaux de bois ou d'éléments ligneux fragmentés, dans une machine à encoller, avec un liant thermodurcissable à base d'un produit de condensation de formaldéhyde, d'urée et/ou de mélamine, avec un rapport molaire du formaldéhyde a l'urée de 1,2:1 à 1,7:1 ou du formaldéhyde à la mélamine de 1,4:1 à 2:1, et pressage des copeaux sous application de chaleur, les copeaux étant en outre traités, dans la machine à encoller, mais indépendamment de l'addition du liant, avec des agents qui servent à améliorer le comportement des matériaux au gonflement ou d'autres caractéristiques, caractérisé en ce qu'indépendamment du traitement par le liant, on traite les copeaux, dans la machine à encoller, avec une dispersion aqueuse qui contient de l'urée dissoute dans la phase aqueuse et, en tant que phase dispersé, une cire minérale et/ou un polymére dispersible dans l'eau, dans une proportion telle qu'en cas d'utilisation d'une cire minérale, la dispersion contienne, pour 100 parties en poids, 5 à 50 parties en poids d'urée et cire minérale et au moins 30 parties en poids d'eau.